# EUROPEAN PATENT SPECIFICATION

(11) **EP 4 174 668 B1**
(45) Date of publication and mention of the grant of the patent: **25.09.2024**
(21) Application number: 22168197.6
(22) Date of filing: 13.04.2022
(51) Int. Cl.: G06F 13/38, G06F 13/40, H04L 12/10, H04L 12/40, G06F 1/26, G06F 13/42, G06F 11/22, G06F 11/273, G06F 9/4401, H04L 41/0806, G06F 13/10, G06F 11/26, H04L 43/0817

(54) **COMMUNICATION INTERFACE ADAPTER, METHOD FOR DYNAMIC PID ASSIGNMENT, AND METHOD FOR AUTOMATICALLY DIAGNOSING PERIPHERAL DEVICE AND RECOVERING PERIPHERAL DEVICE FOUND TO BE IN ABNORMAL OPERATION**
KOMMUNIKATIONSSCHNITTSTELLENADAPTER, VERFAHREN ZUR DYNAMISCHEN PID-ZUWEISUNG UND VERFAHREN ZUR AUTOMATISCHEN DIAGNOSE EINER PERIPHEREN VORRICHTUNG UND ZUM WIEDERHERSTELLEN EINER PERIPHEREN VORRICHTUNG, DIE SICH IN EINEM ABNORMALEN BETRIEB BEFINDET
ADAPTATEUR D'INTERFACE DE COMMUNICATION, PROCÉDÉ D'ATTRIBUTION DE PID DYNAMIQUE ET PROCÉDÉ DE DIAGNOSTIC AUTOMATIQUE DE DISPOSITIF PÉRIPHÉRIQUE ET DE RÉCUPÉRATION DE DISPOSITIF PÉRIPHÉRIQUE IDENTIFIÉ COMME AYANT UN FONCTIONNEMENT ANORMAL

(30) Priority: 29.10.2021 TW 110140288
(43) Date of publication of application: 03.05.2023
(73) Proprietor: Flytech Technology Co., Ltd., Taipei City 11494 (TW)
(72) Inventor: LAM, Tai-Seng, 11494 Taipei City (TW); CHOU, Li-Chun, 11494 Taipei City (TW); TSAI, Shui-Chin, 11494 Taipei City (TW); SU, Chien-Lin, 11494 Taipei City (TW)
(74) Representative: Zinkler, Franz

(56) References cited:
- CN-U- 208 782 785
- US-A1- 2007 299 650
- US-A1- 2019 235 593
- ANON: "YKUSH Yepkit USB Switchable Hub Schematics", 29 November 2017 (2017-11-29), XP055962544, Retrieved from the Internet <URL:https://www.yepkit.com/uploads/documents/aa99b_schematics.zip> [retrieved on 20220919]
- ANON: "YKUSH Yepkit USB Switchable Hub User Manual", 7 March 2016 (2016-03-07), XP055962506, Retrieved from the Internet <URL:https://www.yepkit.com/uploads/documents/e9f11_YKUSH_ProductManual_v1.1.1.pdf> [retrieved on 20220919]
- VADIM MIKHAILOV: "GitHub - mvp/uhubctl: uhubctl - USB hub per-port power control", 17 July 2021 (2021-07-17), XP055962715, Retrieved from the Internet <URL:https://web.archive.org/web/20210717043732/https://github.com/mvp/uhubctl> [retrieved on 20220920]
- ANON: "Application Note AN_124, User Guide for FTDI FT_PROG Utility, Version 1.6", 6 April 2016 (2016-04-06), Unit 1,2 Seaward Place, Glasgow G41 1HH, United Kingdom, pages 1 - 47, XP093010162, Retrieved from the Internet <URL:https://ftdichip.com/wp-content/uploads/2020/07/AN_124_User_Guide_For_FT_PROG.pdf> [retrieved on 20221221]

## Description

The disclosure relates to an adapter, and more particularly to a communication interface adapter that is electrically connected between a computer device and a peripheral device for controlling signal transmission between the computer device and the peripheral device.

US2019/235593 A1, discloses an earphone connected to the USB-C downstream port connector, wherein the user can use the charger on another USB-C downstream port connector to charge the smart phone. This is implemented by using multiple power switches and a data signal switch which is controller by a microprocessor to dynamically establish connections with the upstream USB-C port.

US2007/299650 A1, discloses a method for changing operation of a device comprising: sending target device descriptors to the device's device emulator, which processes and stores the descriptors as the current descriptors in memory, and the device emulator responding to a query from a host simulating operation of the target device.

The application note from Future Technology Devices International Limited " Application Note AN_124 User Guide for FTDI FT_PROG utility, Version 1.6", explains how to use the FT_Prog utility software on a host computer, which provides a user interface to access any EEPROM used with an external FTDI USB to serial adapter devices. In particular how to reprogram arbitrary product identifier, PID and vendor identifier, VID fields.

Computer systems that are used in retail, transportation and public areas are usually composed of a terminal computer and one or more peripheral devices, such as a printer, a barcode scanner, a webcam, a programmable keyboard, etc. Most of these peripheral devices are connected to the terminal computer using communication interfaces, for example but not limited to, the universal serial bus (USB). The terminal computer is usually installed with various application programs that are self-developed by a manufacturer of the terminal computer or developed by independent software developers for commercial or industrial applications. When an application program executed by the terminal computer needs to control one of the peripheral devices, the application program needs an application programming interface (API) provided by a supplier of the peripheral device to command the peripheral device to perform power on, power off, restart, or other actions.

However, the above practice will make the program application unable to support some relevant peripheral devices on the market because supportability of the program application depends on whether the suppliers of the peripheral devices have provided corresponding APIs to the developer of the application program. An application program can only command those of the peripheral devices, the suppliers of which have provided corresponding APIs to the developer of the application program, to perform desired actions such as power on, power off or restart.

Therefore, an object of the disclosure is to provide a communication interface adapter (for example but not limited to, a USB adapter) that can control signal transmission from a computer device to a peripheral device, so a software program of the computer device can control, through the communication interface adapter, any peripheral device that adopts the same communication interface as the communication interface adapter, without being limited to whether a supplier of the peripheral device has provided a corresponding API for use by a developer of the software program.

According to the invention, the communication interface adapter includes a first communication interface to be electrically connected to the computer device, a second communication interface to be electrically connected to the peripheral device, a microcontroller, a communication interface hub electrically connected to the first communication interface and the microcontroller, and a switch unit electrically connected between the communication interface hub and the second communication interface. The switch unit is controlled by the microcontroller to make or break connection between the communication interface hub and the second communication interface.

A further object of the invention is to provide a method of dynamic product identification (PID) assignment, which is applicable when a computer device is connected to multiple communication interface adapters. The method can solve a problem that may occur when the communication interface adapters have the same default PID that are assigned during production. The problem may cause an application program executed by the computer device to submit instructions to wrong peripheral devices. In the method, each of the communication interface adapters includes a first communication interface electrically connected to the computer device, a second communication interface electrically connected to a peripheral device, a microcontroller storing a PID of the communication interface adapter, a communication interface hub electrically connected to the first communication interface and the microcontroller, and a switch unit electrically connected between the communication interface hub and the second communication interface. The switch unit is controlled by the microcontroller to make or break connection between the communication interface hub and the second communication interface.

As further object of the invention, the method includes steps of: by the computer device, reading a peripheral device list that is stored in the computer device, the peripheral device list containing the PID of each of the communication interface adapters; by an identification module of the computer device, obtaining the PIDs of the communication interface adapters based on the peripheral device list, and, upon determining that the PIDs of at least two of the communication interface adapters are identical, assigning a replacement PID which is different from the PIDs of said the communication interface adapters, to one of the at least two of the communication interface adapters through a control module executed by the computer device, so as to replace the PID stored in said one of the at least two of the communication interface adapters with the replacement PID; by the computer device, updating the peripheral device list by using the replacement PID to replace the PID of said one of the at least two of the communication interface adapters contained in the peripheral device list; and by the identification module, recording, based on the peripheral device list thus updated and with respect to each peripheral device among those of the peripheral devices that are each connected to one of the communication interface adapters, a correspondence between the peripheral device and the communication interface adapter in a correspondence table of the computer device.

Other features and advantages of the disclosure will become apparent in the following detailed description of the embodiment(s) with reference to the accompanying drawings, of which:
FIG. 1 is a block diagram illustrating an embodiment of a communication interface adapter according to the disclosure;
FIG. 2 is a block diagram illustrating that a computer device is electrically connected to two peripheral devices respectively through two communication interface adapters of this embodiment;
FIG. 3 is a flow chart illustrating steps of an embodiment of a method of dynamic product identification (PID) assignment;
FIG. 4 is a block diagram illustrating that the computer device is connected to three communication interface adapters having the same PID;
FIG. 5 is a block diagram illustrating that one of the communication interface adapters is assigned a new PID;
FIG. 6 is a block diagram illustrating that another one of the communication interface adapters is assigned another new PID;
FIG. 7, which is not within the scope of protection, is block diagram illustrating that three peripheral devices are connected to the computer device through the communication interface adapters, and two peripheral devices are connected to the computer device without a communication interface adapter in between; and
FIG. 8, which is not within the scope of protection, is a flow chart illustrating steps of an embodiment of a method for automatically diagnosing a peripheral device, and recovering the peripheral device when the peripheral device is found to be in abnormal operation.

Before the disclosure is described in greater detail, it should be noted that where considered appropriate, reference numerals or terminal portions of reference numerals have been repeated among the figures to indicate corresponding or analogous elements, which may optionally have similar characteristics.

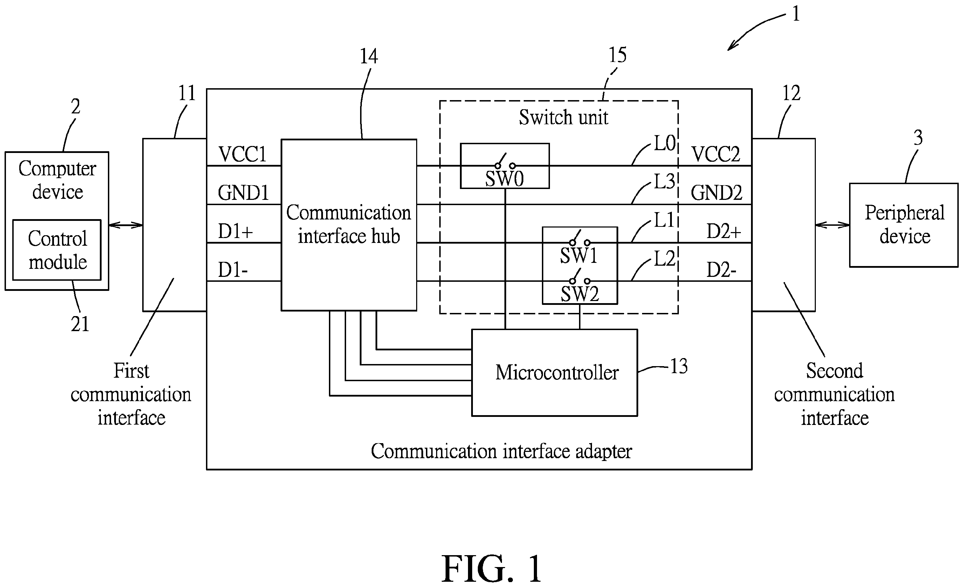

Referring to FIG. 1, an embodiment of a communication interface adapter 1 according to this disclosure is shown to be adapted to control signal transmission between a computer device 2 and a peripheral device 3. In this embodiment, the communication interface adapter 1 is exemplified as a universal serial bus (USB) adapter whose communication interface is a USB interface (i.e., an interface compliant with the USB standard), but this disclosure is not limited in this respect. The communication interface adapter 1 is adapted to be connected to a computer device 2 and a peripheral device 3 (e.g., a USB device whose communication interface is the USB interface), and includes a first communication interface 11 (e.g., a USB connector) that is electrically connected to the computer device 2, a second communication interface 12 (e.g., a USB connector) that is electrically connected to the peripheral device 3, a microcontroller 13, a communication interface hub 14 (e.g., a USB hub) that is electrically connected to the first connector 11 and the microcontroller 13, and a switch unit 15 that is electrically connected between the communication interface hub 14 and the second communication interface 12. The switch unit 15 is electrically connected to the microcontroller 13, and is controlled by the microcontroller 13 to make or break some electrical connections between the communication interface hub 14 and the second communication interface 12.

The microcontroller 13 stores a product identification (PID) (referred to as "controller-stored PID") of the communication interface adapter 1. The communication interface hub 14 receives, from the computer device 2, a first communication interface control signal (referred to as "first control signal" hereinafter) that contains a PID (referred to as "computer-provided PID") and a reset instruction, and transmits the first control signal to the microcontroller 13. Upon receipt of the first control signal and upon determining that the computer-provided PID is identical to the controller-stored PID (which confirms that the communication interface adapter 1 is the intended recipient of the first control signal), the microcontroller 13 controls operation of the switch unit 15 based on the reset instruction included in the first control signal, so as to break at least one of the electrical connections between the communication interface hub 14 and second communication interface 12 and then re-establish the same in order to restart the peripheral device 3 that is electrically connected to the communication interface adapter 1.

The first communication interface 11 includes a power terminal VCC1, a ground terminal GND1 and at least one data signal terminal. The second communication interface 12 includes a power terminal VCC2, a ground terminal GND2 and at least one data signal terminal. In this embodiment, each of the first communication interface 11 and the second communication interface 12 is exemplified as a USB connector, and thus includes two data signal terminals (referred to as a first signal terminal D1+ and a second signal terminal D1- for the first communication interface 11, and as a first signal terminal D2+ and a second signal terminal D2- for the second communication interface 12), but this disclosure is not limited in this respect. The communication interface hub 14 is electrically connected to the power terminal VCC2, the first signal terminal D2+, the second signal terminal D2- and the ground terminal GND2 respectively through a power signal path L0, a first signal path L1, a second signal path L2 and a ground signal path L3. The switch unit 15 includes a power switch SW0, a first signal switch SW1 and a second signal switch SW2. The power switch SW0 is disposed on the power signal path L0, and is controlled by the microcontroller 13 to make or break signal transmission on the power signal path L0. The first signal switch SW1 is disposed on the first signal path L1, and is controlled by the microcontroller 13 to make or break signal transmission on the first signal path L1. The second signal switch SW2 is disposed on the second signal path L2, and is controlled by the microcontroller 13 to make or break signal transmission on the second signal path L2.

Based on the above-mentioned configuration, a power signal outputted by the computer device 2 will be supplied to the peripheral device 3 through the first communication interface 11, the communication interface hub 14, the power signal path L0 and the second communication interface 12 when the power switch SW0 is in a conducting state, and a communication interface signal (e.g., a USB signal) outputted by the computer device 2 will be provided to the peripheral device 3 through the first communication interface 11, the communication interface hub 14, the first and second signal paths L1, L2, and the second communication interface 12 when the first and second signal switches SW1, SW2 are in the conducting state, so operation of the peripheral device 3 can be controlled by the computer device 2. In addition, the power signal and the communication interface signal are also transmitted to the microcontroller 13 through the communication interface hub 14 and signal lines between the communication interface hub 14 and the microcontroller 13, as shown in FIG. 1.

When a processor (e.g., a central processing unit (CPU), not shown) of the computer device 2 executes a control module 21 (e.g., a software program installed in the computer device 2) to reset the peripheral device 3 that is electrically connected to the communication interface adapter 1, the control module 21 generates the first control signal, and the reset instruction contained in the first control signal requests that a reset action be performed with respect to the power signal (i.e., stopping supply of the power signal and then resupplying the power signal to the peripheral device 3). Then, the control module 21 employs a driver program (e.g., a USB driver) that is installed or built in an operating system of the computer device 2 to transmit the first control signal to the microcontroller 13 through the first communication interface 11 and the communication interface hub 14 of the communication interface adapter 1. Upon determining that the reset instruction contained in the first control signal requests that the reset action be performed with respect to the power signal and that the computer-provided PID is identical to the controller-stored PID, the microcontroller 13 turns the power switch SW0 off and then on, so the power signal supplied to the peripheral device 3 is temporarily interrupted and then recovered, so as to restart the peripheral device 3. As a result, the peripheral device 3 is reset after restarting.

In another case where the peripheral device 3 that is electrically connected to the communication interface adapter 1 is powered by another power source instead of by the computer device 2 (for example, voltages required by some devices, such as a printer, may be higher than a voltage that can be provided through an USB interface), when the computer device 2 executes the control module 21 to reset the peripheral device 3, the reset instruction of the first control signal generated by the control module 21 may request that a reset action be performed with respect to the communication interface signal transmitted to the peripheral device 3 (i.e., stopping transmission of the communication interface signal and then retransmitting the same to the peripheral device 3). Upon receipt of the first control signal and upon determining that the reset instruction included in the first control signal requests that the reset action be performed with respect to the communication interface signal transmitted to the peripheral device 3 and that the computer-provided PID is identical to the controller-stored PID, the microcontroller 13 turns the first signal switch SW1 and the second signal switch SW2 off simultaneously and then on simultaneously, so as to restart the peripheral device 3, making the peripheral device 3 receive the communication interface signal through the first signal path L1 and the second signal path L2 again.

In this embodiment, if the peripheral device 3 is powered by the computer device 2, the first signal switch SW1 and the second signal switch SW2 may be omitted from the communication interface adapter 1 that is electrically connected to the peripheral device 3 because restarting the peripheral device 3 can be done by controlling only the power switch SW0; if the power of the peripheral device 3 is not supplied by the computer device 2, the power switch SW0 may be omitted from the communication interface adapter 1 that is electrically connected to peripheral device 3 because restarting the peripheral device 3 can be done by controlling only the first signal switch SW1 and the second signal switch SW2.

Therefore, when an application program developed by an independent software developer demands to restart a peripheral device 3 but the supplier of the peripheral device 3 did not provide an API to the software developer, the application program may be configured to include the control module 21, so the computer device 2 can execute the control module 21 to enable the application program to restart the peripheral device 3 through the communication interface adapter 1 that interconnects the computer device 2 and the peripheral device 3.

In this embodiment, when the microcontroller 13 detects that the communication interface adapter 1 is being electrically connected to the computer device 2 (e.g., detecting receipt of the power signal from the computer device 2), the microcontroller 13 automatically controls the power switch SW0, the first signal switch SW1 and the second signal switch SW2 to be in the conducting state, so as to ensure that the peripheral device 3 is electrically connected to the computer device 2 through the communication interface adapter 1 when the peripheral device 3 is electrically connected to the communication interface adapter 1.

In a case that the microcontroller 13 supports a monitoring mechanism, such as a watchdog mechanism (e.g., including a watchdog timer), the monitoring mechanism may issue a restart signal to the microcontroller 13 upon detecting that a main program that is being executed by the microcontroller 13 has an error, so as to restart the microcontroller 13 to recover the microcontroller 13 to a normal operation state. In order to ensure that the peripheral device 3 is electrically connected to the computer device 2 after the microcontroller 13 of the communication interface adapter 1 restarts, the microcontroller 13 is configured to automatically control the power switch SW0, the first signal switch SW1 and the second signal switch SW2 to be in the conducting state when the microcontroller 13 restarts.

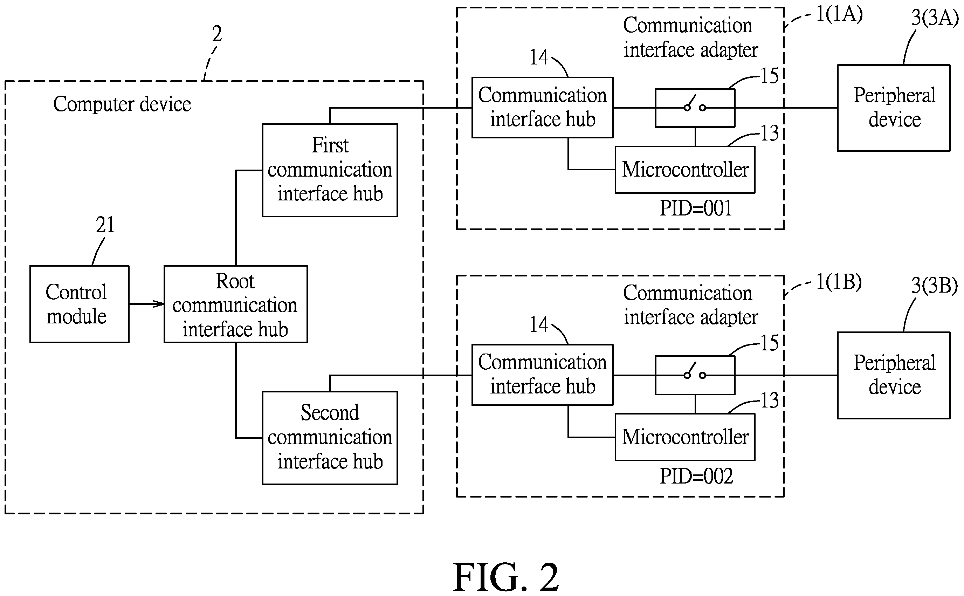

FIG. 2 exemplarily illustrates a case where multiple peripheral devices 3 are electrically connected to the computer device 2 respectively through multiple communication interface adapters 1 of this embodiment. It is noted that the first and second communication interfaces 11, 12 of each of the communication interface adapters 1 are not shown in FIGS. 2 and 4 to 7 for the sake of clarity. In FIG. 2, the peripheral devices 3 are exemplified as a peripheral device 3A and a peripheral device 3B, and the communication interface adapters 1 are exemplified as a communication interface adapter 1A and a communication interface adapter 1B. Each of the peripheral devices 3A, 3B is electrically connected to the corresponding one of the communication interface adapters 1A, 1B that are electrically and respectively connected to a first communication interface hub (e.g., a first USB hub) and a second communication interface hub (e.g., a second USB hub). The first and second communication interface hubs are electrically connected to a root communication interface hub which is controlled by the control module 21. In this embodiment, the first communication interface hub, the second communication interface hub and the root communication interface hub are built in the computer device 2, but this disclosure is not limited in this respect. In this case, the computer device 2 may classify the peripheral device 3A and the microcontroller 13 of the communication interface adapter 1A as devices pertaining to the communication interface hub 14 of the communication interface adapter 1A, and classify the peripheral device 3B and the microcontroller 13 of the communication interface adapter 1B as devices pertaining to the communication interface hub 14 of the communication interface adapter 1B. Since the microcontrollers 13 of the communication interface adapters 1A, 1B are devices pertaining to the communication interface hubs 14 of the communication interface adapters 1A, 1B, which are USB hubs in this embodiment, each of the microcontrollers 13 is assigned a PID (i.e., the controller-stored PID) according to the USB standard.

Assuming that the PIDs stored in the microcontrollers 13 of the communication interface adapters 1A, 1B are "001" and "002", respectively, when the control module 21 that is included in the application program is operated to control, for example, the peripheral device 3B that is connected to the communication interface adapter 1B to restart, the first control signal generated by the control module 21 should include the reset instruction and the computer-provided PID that is identical to the PID "002" stored in the microcontroller 13 of the communication interface adapter 1B. Upon receipt of the first control signal and upon determining that the computer-provided PID is identical to the controller-stored PID of the communication interface adapter 1B, the microcontroller 13 of the communication interface adapter 1B controls operation of the switch unit 15 of the communication interface adapter 1B based on the reset instruction included in the first control signal to restart the peripheral device 3B.

In practice, the communication interface adapters 1 may be assigned the same PID (e.g., a default PID) during production, so the microcontrollers 13 of the communication interface adapters 1 that are electrically connected to the computer device 2 may have identical PIDs. However, in order to correctly control operation of a specified one of the communication interface adapters 1 that is electrically connected to the computer device 2, each of the controller-stored PIDs of the communication interface adapters 1 should be unique (i.e., the PIDs of devices that are electrically connected to the computer device 2 should be different from each other) .

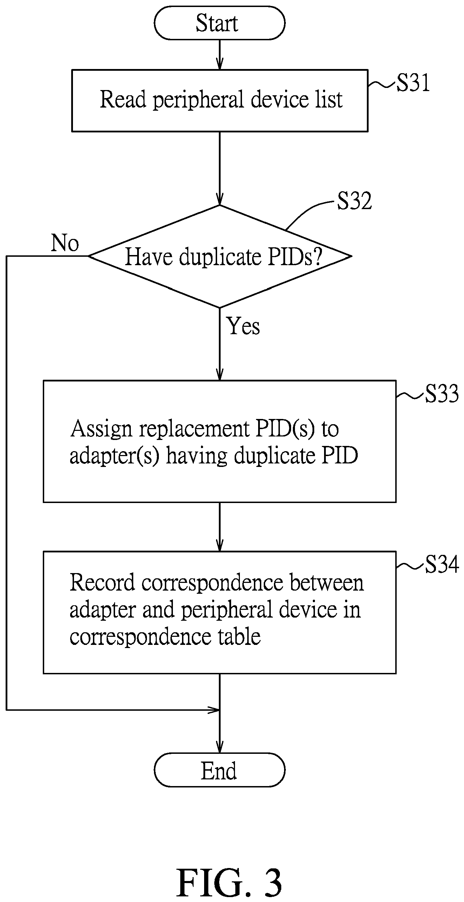

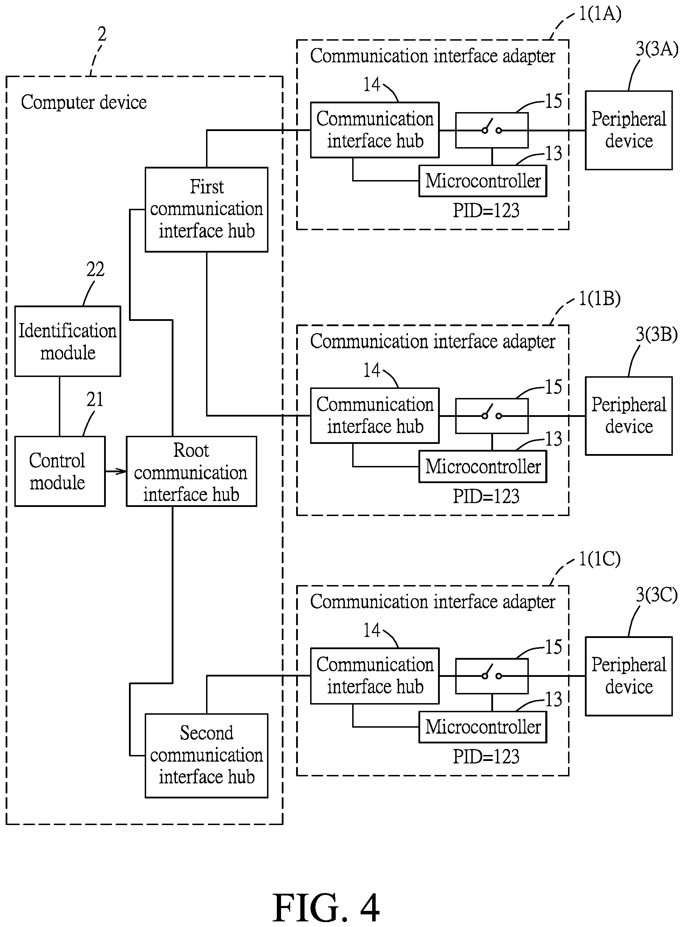

Referring to FIG. 4, in order to ensure that, for each of the communication interface adapters 1 electrically connected to the computer device 2, the PID stored in the microcontroller 13 thereof is unique, the application program may further include an identification module 22 that, when being executed by the computer device 2, causes the computer device 2 to implement a method of dynamic PID assignment. Further referring to FIG. 3, an embodiment of the method of dynamic PID assignment according to this disclosure is illustrated to be adapted for application on the communication interface adapters 1 that have identical PIDs. Usually, when the computer device 2 is powered on, a device that is connected to the computer device 2 will automatically transmit various descriptors that describe its characteristics and required configurations (e.g., device descriptor, configuration descriptor, string descriptor, interface descriptor, endpoint descriptor, device qualifier, other speed configuration, interface power, etc.) to the computer device 2. Specifically, the descriptors include a device descriptor that contains a PID of the device. As exemplified in FIG. 4, after being electrically connected to the computer device 2, each of the communication interface adapters 1A, 1B, 1C will transmit a respective device descriptor to the computer device 2, and the respective device descriptor includes the controller-stored PID of the corresponding one of the communication interface adapters 1A, 1B, 1C. Subsequently, the computer device 2 establishes a peripheral device list according to the descriptors received from all of the devices that are directly (e.g., the communication interface adapters 1A, 1B, 1C) or indirectly (e.g., the peripheral devices 3A, 3B, 3C that are respectively connected to the communication interface adapters 1A, 1B, 1C) connected to the computer device 2. The peripheral device list may contain information of all the devices and their descriptors (including the device descriptors). The computer device 2 further establishes a topology (e.g., a USB topology) that is related to the communication interface and that defines connection relationship among all the devices connected to the computer device 2. Hereinafter, the embodiment of the method of dynamic PID assignment as illustrated in FIG. 3 will be described with reference to the case illustrated in FIG. 4.

In step S31, after the computer device 2 is powered on and establishes the peripheral device list, the identification module 22 automatically reads the peripheral device list stored in the computer device 2, and thus obtains the PIDs (i.e., the controller-stored PIDs) of the communication interface adapters 1A, 1B, 1C based on the peripheral device list.

In step S32, the identification module 22 determines whether some of the PIDs of the communication interface adapters 1A, 1B, 1C are identical. The flow goes to step S33 when the identification module 22 determines that the PIDs of at least two of the communication interface adapters 1 are identical, and ends when otherwise. In FIG. 4, each of the PIDs of the communication interface adapters 1A, 1B, 1C is exemplified to be "123" (i.e., the "at least two of the communication interface adapters 1" include the communication interface adapters 1A, 1B, 1C), so two of the communication interface adapters 1A, 1B, 1C (which are exemplified as the communication interface adapters 1B, 1C in the following descriptions) each need to be assigned a different and unique PID.

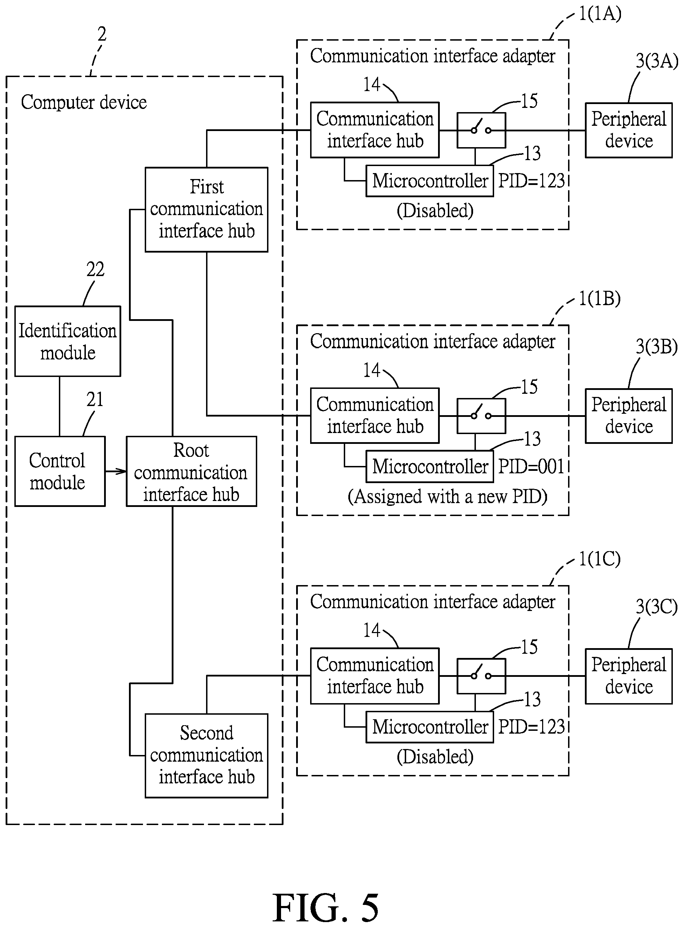

In step S33, the identification module 22 assigns replacement PIDs respectively to the communication interface adapters 1B, 1C, so that each of the communication interface adapters 1B, 1C uses the respective replacement PID to replace the original controller-stored PID, thereby making each of the communication interface adapters 1A, 1B, 1C have a unique PID. In this embodiment, the identification module 22 first assigns a replacement PID, which is different from the PIDs of the communication interface adapters 1A, 1B, 1C, to the communication interface adapter 1B, so as to replace the PID stored in the communication interface adapter 1B with the replacement PID, as shown in FIG. 5. In detail, the identification module 22 disables the communication interface adapters 1A, 1C (i.e., disabling the communication interface adapters 1 except for the communication interface adapter 1B), so the communication interface adapters 1A, 1C are unable to receive any signal from the computer device 2. Then, the identification module 22 generates a replacement PID for the communication interface adapter 1B having at most a predetermined maximum number of bits by either a random manner (e.g., randomly generating the replacement PID that is different from the PIDs of the communication interface adapters 1A, 1C) or a predetermined manner (e.g., generating the replacement PID that is different from the PIDs of the communication interface adapters 1A, 1C based on a predetermined rule, such as selecting a smallest or greatest one of unoccupied PIDs from a series of PIDs starting from "001", or generating the replacement PID as "124" that is immediately next to the PIDs "123" of the communication interface adapters 1A, 1C). The identification module 22 further determines whether the replacement PID thus generated is identical to any one of the PIDs that have been recorded in the peripheral device list. The identification module 22 may discard the replacement PID when it is determined that the replacement PID thus generated is identical to any one of the PIDs recorded in the peripheral device list, and regenerate another replacement PID until the replacement PID is different from all of the PIDs recorded in the peripheral device list. Herein, the replacement PID for the communication interface adapter 1B is exemplified as "001", and the identification module 22 transmits, through the control module 21, a second communication interface control signal (referred to as "second control signal" hereinafter) that includes a PID of a target device (i.e., the computer-provided PID, which is identical to the PID "123" of the communication interface adapter 1B herein), a control instruction, and computer-provided data that contains the replacement PID "001", to the microcontroller 13 of the communication interface adapter 1B. Upon receiving the second control signal and determining that the computer-provided PID is identical to the controller-stored PID of the communication interface adapter 1B (i.e., both being "123" in this case), the microcontroller 13 of the communication interface adapter 1B reads the control instruction and the computer-provided data that contains the replacement PID "001", and, after confirming that the control instruction requests that a replacement action be performed to replace the controller-stored PID "123" with the replacement PID "001", the microcontroller 13 of the communication interface adapter 1B stores the replacement PID "001" as the controller-stored PID (i.e., using the replacement PID "001" to replace the controller-stored PID "123") .

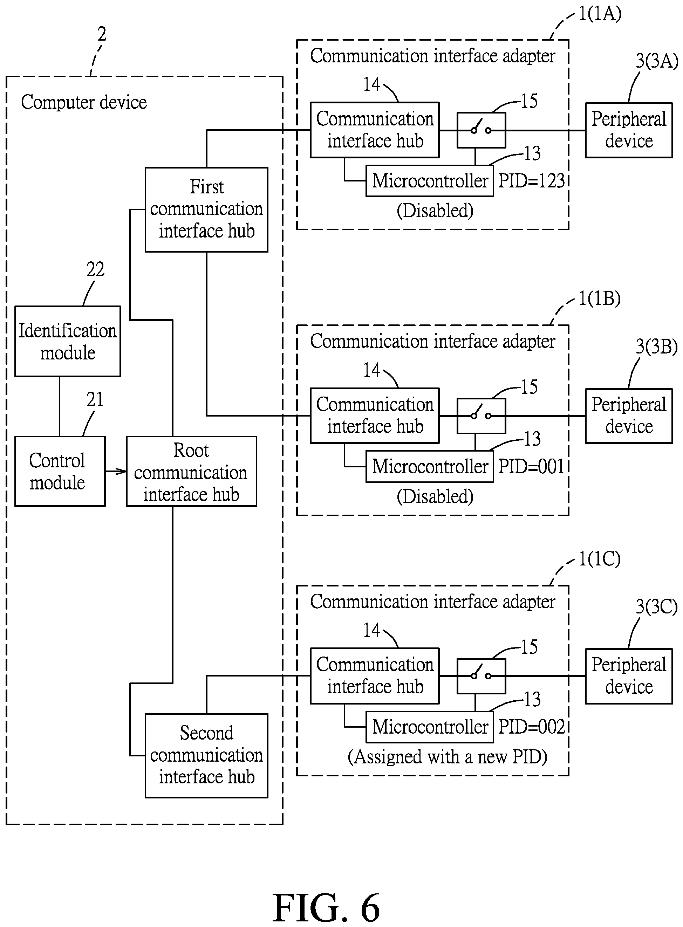

Subsequently, the identification module 22 notifies the control module 21 to disable the microcontrollers 13 of the communication interface adapters 1A, 1B (i.e., disabling the communication interface adapters 1 except for the communication interface adapter 1C), so the communication interface adapters 1A, 1B are unable to receive any signal from the computer device 2. Then, the identification module 22 generates a replacement PID for the communication interface adapter 1C having at most the predetermined maximum number of bits by either the random manner or the predetermined manner. Herein, the replacement PID for the communication interface adapter 1C is exemplified as "002", and the identification module 22 transmits, through the control module 21, the second control signal that includes a PID of a target device (i.e., the computer-provided PID, which is the same as the PID "123" of the communication interface adapter 1C herein), the control instruction, and computer-provided data that contains the replacement PID "002", to the microcontroller 13 of the communication interface adapter 1C. Upon receiving the second control signal and determining that the computer-provided PID is identical to the controller-stored PID of the communication interface adapter 1C (i.e., both being "123" in this case), the microcontroller 13 of the communication interface adapter 1C stores the replacement PID "002" as the controller-stored PID (i.e., using the replacement PID "002" to replace the controller-stored PID "123"), as shown in FIG. 6. As a result, the dynamic PID assignment for the communication interface adapters 1 is completed without breaking physical connections between the communication interface adapters 1 and the computer device 2, and each of the communication interface adapters 1A, 1B, 1C thus has a unique PID, and the computer device 2 can thus correctly provide instructions to the microcontroller 13 of a specified one of the communication interface adapters 1 based on the unique PID stored in the communication interface adapter 1.

After the dynamic PID assignment, the operating system of the computer device 2 will find that the controller-stored PIDs of the communication interface adapters 1B, 1C have been changed, and then update the peripheral device list by using the replacement PIDs for the communication interface adapters 1B, 1C to replace the PIDs of the communication interface adapters 1B, 1C contained in the peripheral device list.

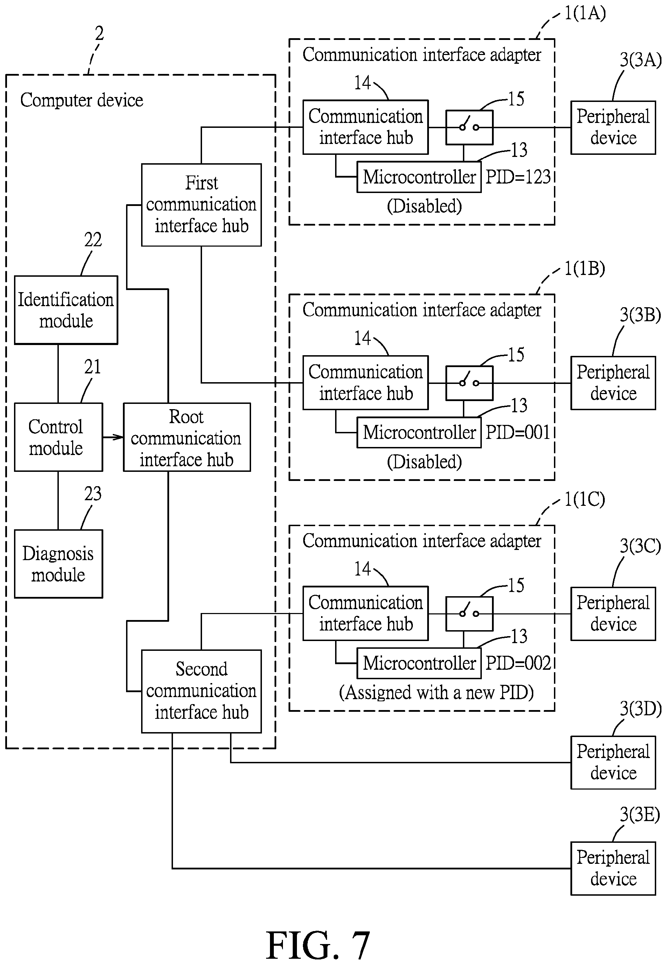

In step S34, the identification module 22 records, based on the peripheral device list thus updated and with respect to each peripheral device 3 that is connected to one of the communication interface adapters 1 (as opposed to a peripheral device 3 that is connected to the computer device 2 without a connection through a communication interface adapter 1), a correspondence between the peripheral device 3 and the communication interface adapter 1 in a correspondence table of the computer device 2. Table 1 illustrates an exemplary correspondence table for a case as shown in FIG. 7, where the microcontroller 13 of the communication interface adapter 1A corresponds to the peripheral device 3A that is electrically connected to the communication interface adapter 1A, the microcontroller 13 of the communication interface adapter 1B corresponds to the peripheral device 3B that is electrically connected to the communication interface adapter 1B, and the microcontroller 13 of the communication interface adapter 1C corresponds to the peripheral device 3C that is electrically connected to the communication interface adapter 1C. In addition, for some other peripheral devices 3D, 3E that are directly connected (i.e., without a connection through a communication interface adapter 1) to the computer device 2 (referred to as directly-connected peripheral devices 3D, 3E), the application program also records, based on the peripheral device list thus updated, each directly-connected peripheral device 3 in the correspondence table.

**Table 1**

| Adapter | Control target |
|---|---|
| Microcontroller of adapter 1A | Peripheral device 3A |
| Microcontroller of adapter 1B | Peripheral device 3B |
| Microcontroller of adapter 1C | Peripheral device 3C |
| N/A | Peripheral device 3D |
| N/A | Peripheral device 3E |

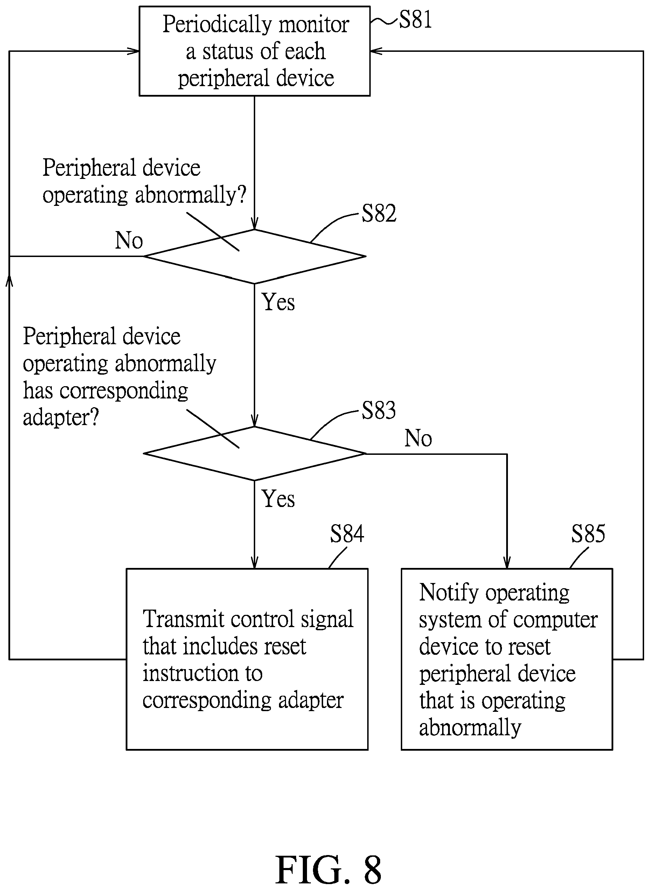

Furthermore, as illustrated in FIG. 7, which is not within the scope of protection, the application program may further include a diagnosis module 23 that can, when executed by the computer device 2, use the correspondence table (or generate the correspondence table as described above) to perform automatic diagnosis on the peripheral devices 3A, 3B, 3C, 3D, 3E that are directly or indirectly connected to the computer device 2. Further referring to FIG. 8, which is not within the scope of protection, an embodiment of a method for automatically diagnosing a peripheral device according to this disclosure is provided. The embodiment of the method is also adapted for recovering the peripheral device when the peripheral device is found to be in abnormal operation.

In step S81, the diagnosis module 23 periodically monitors a status of each of the peripheral devices 3 that is recorded in the correspondence table. For example, the diagnosis module 23 may read and detect operation information of the peripheral devices 3 through the operating system of the computer device 2.

In step S82, with respect to each of the peripheral devices 3, the diagnosis module 23 determines whether the peripheral device 3 is operating abnormally. For example, the diagnosis module 23 may determine whether the peripheral device 3 cannot be detected, whether the peripheral device 3 cannot be identified, whether an error related to a driver program of the peripheral devices 3 has been detected, whether the peripheral device 3 is operating intermittently, etc. If any one of the abovementioned determinations is affirmative, the diagnosis module 23 determines that the peripheral device 3 is operating abnormally, and the flow goes to step S83 for the peripheral device 3.

In step S83, the diagnosis module 23 determines, based on the correspondence table, whether the peripheral device 3 that is operating abnormally has a corresponding communication interface adapter 1. The flow goes to step S84 when the determination of step S83 is affirmative (e.g., the peripheral device 3 that is operating abnormally is the peripheral device 3B, which has a corresponding communication interface adapter 1B), and goes to step S85 when otherwise, which means that the peripheral device 3 that is operating abnormally is a directly-connected peripheral device, which is exemplified as the peripheral device 3D hereinafter.

In step S84, the diagnosis module 23 finds out, based on the correspondence table, the communication interface adapter 1 that is connected to the peripheral device 3 which is operating abnormally. Hereinafter, the peripheral device 3 that is operating abnormally is exemplified as the peripheral device 3B, and the corresponding one of the communication interface adapters 1 is the communication interface adapters 1B. The diagnosis module 23 obtains the controller-stored PID of the communication interface adapter 1B from the peripheral device list, and transmits, through the control module 21 to the microcontroller 13 of the communication interface adapter 1B, the first control signal that contains the reset instruction and a computer-provided PID identical to the PID of the communication interface adapter 1B as recorded in the peripheral device list.

Upon receiving the first control signal and determining that the computer-provided PID is identical to the controller-stored PID of the communication interface adapter 1B, the microcontroller 13 of the communication interface adapter 1B controls, based on the reset instruction, the peripheral device 3B that is connected to the communication interface adapter 1B and that is operating abnormally to restart, so as to recover the peripheral device 3B.

In step S85, the diagnosis module 23 notifies the operating system of the computer device 2 to use a built-in reset function to reset the directly-connected peripheral device 3D that is operating abnormally, so as to recover the peripheral device 3D to the normal operation state.

In summary, the communication interface adapter 1 that is electrically connected between the computer device 2 and the peripheral device 3 enables the computer device 2 that executes the application program to submit instructions to the microcontroller 13 of the communication interface adapter 1, so as to control operation of the switch unit 15 to restart the peripheral device 3. As a result, the ability of the application program to control the peripheral device 3 is not limited to whether the supplier of the peripheral device 3 has provided a corresponding API for use by the developer of the application program. In addition, the embodiment of this disclosure further provides a method for automatically diagnosing the peripheral device 3, and, when the peripheral device 3 is found to be operating abnormally, the computer device 2 can make the peripheral device 3 perform hardware reset by restarting the peripheral device 3, thereby recovering the peripheral device 3 to the normal operation state.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure.

## Claims

1. A method of dynamic product identification, PID, assignment, including a step of:
providing a plurality of communication interface adapters (1) connected to a computer device (2), each of the communication interface adapters (1) including:
a first communication interface (11) electrically connected to the computer device (2);
a second communication interface (12) electrically connected to a peripheral device (3);
a microcontroller (13);
a communication interface hub (14) electrically connected to the first communication interface (11) and the microcontroller (13); and
a switch unit (15) electrically connected between the communication interface hub (14) and the second communication interface (12), the switch unit (15) being controlled by the microcontroller (13) to make or break connection between the communication interface hub (14) and the second communication interface (12);
the method being **characterized in that** the microcontroller (13) of each of the communication interface adapters (1) stores a PID of the communication interface adapter (1), and that the method further includes steps of:
by the computer device (2), reading (S31) a peripheral device list that is stored in the computer device (2), the peripheral device list containing the PID of each of the communication interface adapters (1);
by an identification module (22) of the computer device (2), obtaining the PIDs of the communication interface adapters (1) based on the peripheral device list, and, upon determining (S32) that the PIDs of at least two of the communication interface adapters (1) are identical, assigning (S33) a replacement PID which is different from the PIDs of said the communication interface adapters (1), to one of the at least two of the communication interface adapters (1) through a control module (21) executed by the computer device (2), so as to replace the PID stored in said one of the at least two of the communication interface adapters (1) with the replacement PID;
by the computer device (2), updating the peripheral device list by using the replacement PID to replace the PID of said one of the at least two of the communication interface adapters (1) contained in the peripheral device list; and
by the identification module (22), recording (S34), based on the peripheral device list thus updated and with respect to each peripheral device (3) among those of the peripheral devices (3) that are each connected to one of the communication interface adapters (1), a correspondence between the peripheral device (3) and the communication interface adapter (1) in a correspondence table of the computer device (2).

2. The method of claim 1, wherein the at least two of the communication interface adapters (1) include a first communication interface adapter (1A), a second communication interface adapter (1B) and a third communication interface adapter (1C), and the step of assigning (S33) the replacement PID includes:
disabling the at least two of the communication interface adapters (1) except for the first communication interface adapter (1A);
generating the replacement PID;
providing the replacement PID to the first communication interface adapter (1A), so that the PID stored in the first communication interface adapter (1A) is replaced by the replacement PID;
disabling the at least two of the communication interface adapters (1) except for the second communication interface adapter (1B);
generating another replacement PID that is different from the PIDs of the communication interface adapters (1); and
providing said another replacement PID to the second communication interface adapter (1B), so that the PID stored in the second communication interface adapter (1B) is replaced by said another replacement PID.

3. The method of claim 1 or 2, further including a step of, by the identification module (22), recording, based on the peripheral device list thus updated, each directly-connected peripheral device that is connected to the computer device (2) without connection through a communication interface adapter (1) in the correspondence table.

4. The method of claim 1, 2 or 3, wherein the step of updating the peripheral device list is performed upon the computer device (2) finding that the PID of said one of the at least two of the communication interface adapters (1) is changed.

## Patentansprüche

1. Ein Verfahren zur dynamischen Produktidentifikation-, PID-, Zuweisung, das folgenden Schritt umfasst:
Bereitstellen einer Mehrzahl von Kommunikationsschnittstellenadaptern (1), die mit einem Computergerät (2) verbunden sind, wobei jeder der Kommunikationsschnittstellenadapter (1) folgende Merkmale umfasst:
eine erste Kommunikationsschnittstelle (11), die elektrisch mit dem Computergerät (2) verbunden ist;
eine zweite Kommunikationsschnittstelle (12), die elektrisch mit einem Peripheriegerät (3) verbunden ist;
einen Mikrocontroller (13);
einen Kommunikationsschnittstellen-Hub (14), der elektrisch mit der ersten Kommunikationsschnittstelle (11) und dem Mikrocontroller (13) verbunden ist; und
eine Schalteinheit (15), die elektrisch zwischen den Kommunikationsschnittstellen-Hub (14) und die zweite Kommunikationsschnittstelle (12) geschaltet ist, wobei die Schalteinheit (15) durch den Mikrocontroller (13) gesteuert wird, um eine Verbindung zwischen dem Kommunikationsschnittstellen-Hub (14) und der zweiten Kommunikationsschnittstelle (12) herzustellen oder zu trennen;
wobei das Verfahren **dadurch gekennzeichnet ist, dass** der Mikrocontroller (13) von jedem der Kommunikationsschnittstellenadapter (1) eine PID des Kommunikationsschnittstellenadapters (1) speichert, und dass das Verfahren ferner folgende Schritte umfasst:
durch das Computergerät (2), Lesen (S31) einer Liste von Peripheriegeräten, die in dem Computergerät (2) gespeichert ist, wobei die Liste von Peripheriegeräten die PID von jedem der Kommunikationsschnittstellenadapter (1) enthält;
durch ein Identifikationsmodul (22) des Computergeräts (2), Erhalten der PID der Kommunikationsschnittstellenadapter (1) basierend auf der Liste von Peripheriegeräten, und auf ein Bestimmen (S32) hin, dass die PID von zumindest zwei der Kommunikationsschnittstellenadapter (1) identisch sind, Zuweisen (S33) einer Ersatz-PID, die sich von den PID der Kommunikationsschnittstellenadapter (1) unterscheidet, zu einem der zumindest zwei der Kommunikationsschnittstellenadapter (1) durch ein Steuermodul (21), das durch das Computergerät (2) ausgeführt wird, um die PID, die in dem einen der zumindest zwei der Kommunikationsschnittstellenadapter (1) gespeichert ist, durch die Ersatz-PID zu ersetzen;
durch das Computergerät (2), Aktualisieren der Liste von Peripheriegeräten unter Verwendung der Ersatz-PID, um die PID des einen der zumindest zwei der Kommunikationsschnittstellenadapter (1), die in der Liste von Peripheriegeräten enthalten sind, zu ersetzen; und
durch das Identifikationsmodul (22), Aufzeichnen (S34), basierend auf der derart aktualisierten Liste von Peripheriegeräten und in Bezug auf jedes Peripheriegerät (3) unter denjenigen der Peripheriegeräte (3), die jeweils mit einem der Kommunikationsschnittstellenadapter (1) verbunden sind, einer Entsprechung zwischen dem Peripheriegerät (3) und dem Kommunikationsschnittstellenadapter (1) in einer Entsprechungstabelle des Computergeräts (2).

2. Das Verfahren gemäß Anspruch 1, wobei die zumindest zwei der Kommunikationsschnittstellenadapter (1) einen ersten Kommunikationsschnittstellenadapter (1A), einen zweiten Kommunikationsschnittstellenadapter (1B) und einen dritten Kommunikationsschnittstellenadapter (1C) umfassen, und der Schritt des Zuweisens (S33) der Ersatz-PID folgende Schritte umfasst:
Deaktivieren der zumindest zwei der Kommunikationsschnittstellenadapter (1) mit Ausnahme des ersten Kommunikationsschnittstellenadapters (1A);
Erzeugen der Ersatz-PID;
Bereitstellen der Ersatz-PID für den ersten Kommunikationsschnittstellenadapter (1A), so dass die PID, die in dem ersten Kommunikationsschnittstellenadapter (1A) gespeichert ist, durch die Ersatz-PID ersetzt wird;
Deaktivieren der zumindest zwei der Kommunikationsschnittstellenadapter (1) mit Ausnahme des zweiten Kommunikationsschnittstellenadapters (1B);
Erzeugen einer weiteren Ersatz-PID, die sich von den PID der Kommunikationsschnittstellenadapter (1) unterscheidet; und
Bereitstellen der weiteren Ersatz-PID für den zweiten Kommunikationsschnittstellenadapter (1B), so dass die PID, die in dem zweiten Kommunikationsschnittstellenadapter (1B) gespeichert ist, durch die weitere Ersatz-PID ersetzt wird.

3. Das Verfahren gemäß Anspruch 1 oder 2, das ferner einen Schritt des Aufzeichnens, durch das Identifikationsmodul (22), basierend auf der derart aktualisierten Liste von Peripheriegeräten, jedes direkt verbundenen Peripheriegeräts, das mit dem Computergerät (2) ohne Verbindung durch einen Kommunikationsschnittstellenadapter (1) verbunden ist, in der Entsprechungstabelle umfasst.

4. Das Verfahren gemäß Anspruch 1, 2 oder 3, wobei der Schritt des Aktualisierens der Liste von Peripheriegeräten durchgeführt wird, wenn das Computergerät (2) feststellt, dass die PID des einen der zumindest zwei der Kommunikationsschnittstellenadapter (1) geändert wird.

## Revendications

1. Procédé d'attribution d'identification dynamique de produit, PID, comportant une étape consistant à:
prévoir une pluralité d'adaptateurs d'interface de communication (1) connectés à un dispositif informatique (2), chacun des adaptateurs d'interface de communication (1) comportant:
une première interface de communication (11) connectée électriquement au dispositif informatique (2);
une deuxième interface de communication (12) connectée électriquement à un dispositif périphérique (3);
un microcontrôleur (13);
un concentrateur d'interface de communication (14) connecté électriquement à la première interface de communication (11) et au microcontrôleur (13); et
une unité de commutation (15) connectée électriquement entre le concentrateur d'interface de communication (14) et la deuxième interface de communication (12), l'unité de commutation (15) étant commandée par le microcontrôleur (13) pour établir ou rompre la connexion entre le concentrateur d'interface de communication (14) et la deuxième interface de communication (12);
le procédé étant **caractérisé par le fait que** le microcontrôleur (13) de chacun des adaptateurs d'interface de communication (1) mémorise une PID de l'adaptateur d'interface de communication (1), et que le procédé comporte par ailleurs les étapes consistant à:
lire (S31), par le dispositif informatique (2), une liste de dispositifs périphériques qui est mémorisée dans le dispositif informatique (2), la liste de dispositifs périphériques contenant la PID de chacun des adaptateurs d'interface de communication (1);
obtenir, par un module d'identification (22) du dispositif informatique (2), les PID des adaptateurs d'interface de communication (1) sur base de la liste de dispositifs périphériques et, après avoir déterminé (S32) que les PID d'au moins deux des adaptateurs d'interface de communication (1) sont identiques, attribuer (S33) une PID de remplacement qui est différente des PID desdits adaptateurs d'interface de communication (1) à l'un des au moins deux adaptateurs d'interface de communication (1) par l'intermédiaire d'un module de commande (21) exécuté par le dispositif informatique (2), de manière à remplacer la PID mémorisée dans ledit un des au moins deux adaptateurs d'interface de communication (1) par la PID de remplacement;
mettre à jour, par le dispositif informatique (2), la liste de dispositifs périphériques à l'aide de la PID de remplacement pour remplacer la PID dudit un des au moins deux adaptateurs d'interface de communication (1) contenus dans la liste de dispositifs périphériques; et
enregistrer (S34), par le module d'identification (22), sur base de la liste de dispositifs périphériques ainsi mise à jour et en ce qui concerne chaque dispositif périphérique (3) parmi ceux des dispositifs périphériques (3) qui sont connectés, chacun, à l'un des adaptateurs d'interface de communication (1), une correspondance entre le dispositif périphérique (3) et l'adaptateur d'interface de communication (1) dans un tableau de correspondance du dispositif informatique (2).

2. Procédé selon la revendication 1, dans lequel les au moins deux des adaptateurs d'interface de communication (1) comportent un premier adaptateur d'interface de communication (1A), un deuxième adaptateur d'interface de communication (1B) et un troisième adaptateur d'interface de communication (1C), et l'étape d'attribution (S33) de la PID de remplacement comporte le fait de:
désactiver les au moins deux des adaptateurs d'interface de communication (1), à l'exception du premier adaptateur d'interface de communication (1A);
générer la PID de remplacement;
fournir la PID de remplacement au premier adaptateur d'interface de communication (1A), de sorte que la PID mémorisée dans le premier adaptateur d'interface de communication (1A) soit remplacée par la PID de remplacement;
désactiver les au moins deux des adaptateurs d'interface de communication (1), à l'exception du deuxième adaptateur d'interface de communication (1B);
générer une autre PID de remplacement qui est différente des PID des adaptateurs d'interface de communication (1); et
fournir ladite autre PID de remplacement au deuxième adaptateur d'interface de communication (1B), de sorte que la PID mémorisée dans le deuxième adaptateur d'interface de communication (1B) soit remplacée par ladite autre PID de remplacement.

3. Procédé selon la revendication 1 ou 2, comportant par ailleurs une étape consistant à enregistrer, par le module d'identification (22), sur base de la liste de dispositifs périphériques ainsi mise à jour, chaque dispositif périphérique directement connecté qui est connecté au dispositif informatique (2) sans connexion à travers un adaptateur d'interface de communication (1) dans le tableau de correspondance.

4. Procédé selon la revendication 1, 2 ou 3, dans lequel l'étape de mise à jour de la liste de dispositifs périphériques est effectuée lorsque le dispositif informatique (2) trouve que la PID dudit un des au moins deux adaptateurs d'interface de communication (1) est changée.
